Europäisches Patentamt

**European Patent Office**

Office européen des brevets

(11) Numéro de publication: **0 016 716**
A1

## (12) DEMANDE DE BREVET EUROPEEN

(21) Numéro de dépôt: **80420034.3**

(22) Date de dépôt: **14.03.80**

(51) Int. Cl.³: **G 01 S 15/60**
G 01 S 15/87, G 01 P 5/00

(30) Priorité: **15.03.79 FR 7907083**

(43) Date de publication de la demande:
**01.10.80 Bulletin 80/20**

(84) Etats Contractants Désignés:
**BE DE GB IT NL**

(71) Demandeur: **Buttin, René**
**Les Amandines no 3 Ancienne voie romaine**
**F-69290 Craponne(FR)**

(71) Demandeur: **Gubert, Alain**
**75 route de Paris**
**F-69160 Tassin La Demi-Lune(FR)**

(72) Inventeur: **Buttin, René**
**Les Amandines no 3 Ancienne voie romaine**
**F-69290 Craponne(FR)**

(72) Inventeur: **Gubert, Alain**
**75 route de Paris**
**F-69160 Tassin La Demi-Lune(FR)**

(74) Mandataire: **Karmin, Roger**
**Cabinet MONNIER 150, cours Lafayette**
**F-69003 Lyon(FR)**

(54) Loch-dérivomètre.

(57) Sur un voilier (2) sont disposés deux couples de transducteurs émetteur et récepteur ultra-sonores dont les axes moyens (P1, P2) font avec l'axe (X-X) du voilier des angles aigus égaux (α) dans un sens et dans l'autre. On relève les différences de fréquence entre l'émission et l'écho dues à l'effet Doppler et, sans toucher aux angles (α) qui restent fixes, on en déduit l'angle de dérive (δ), c'est-à-dire l'angle entre l'axe (X-X) et l'axe de navigation réel (Y-Y), ainsi que la vitesse suivant ledit axe (Y-Y). Les deux transducteurs élémentaires de chaque couple peuvent être focalisés, c'est-à-dire comporter des axes individuels qui convergent.
Navigation des bateaux et engins analogues.

Fig. 2

Loch-dérivomètre

La présente invention se rapporte à la mesure de la vitesse d'un engin de navigation par rapport à l'eau.

On connaît à cet effet des appareils à faisceau d'ondes ultra-sonores, qui utilisent la différence de fréquence entre l'émission et l'écho (effet Doppler). Ils comprennent un transducteur émetteur orienté et un transducteur d'écho, souvent combiné au précédent, ainsi que des circuits électroniques de détermination de la différence de fréquence qui permettent de mesurer la vitesse. Mais dans le cas d'un engin à voile la vitesse ainsi relevée est mesurée suivant l'axe de l'engin ; elle ne tient aucun compte de la dérive. Or cette dernière atteint parfoir une grande importance, de sorte que le navigateur ne peut plus se baser sur cette valeur pour déterminer le trajet parcouru.

On a proposé pour les avions des appareils orientables à paires de faisceaux ultra-sonores croisées, qui, toujours basés sur l'effet Doppler, mesurent la vitesse de déplacement par rapport au sol. Lorsque l'avion dérive le système de faisceaux est déséquilibré et pour le ramener à l'équilibre il faut décaler son axe par rapport à celui de l'avion, ce décalage constituant l'indication de l'angle de dérive. L'appareil est alors centré sur l'axe de déplacement vrai de l'avion par rapport au sol, de sorte que ses indications permettent d'établir le trajet réel de l'engin. Malheureusement l'on aboutit à des dispositifs compliqués avec support mobile, mécanisme de commande d'orientation à servo-moteur, circuits détecteurs de déséquilibre et relais de commande. L'ensemble devient coûteux, encombrant et moins fiable que les appareils fixes de la technique habituelle, surtout si l'on tient compte du fait que pour l'application à la navigation les transducteurs doivent être immergés.

L'invention vise à remédier à ces inconvénients et à permettre d'établir un dispositif simple, ne comportant aucun système mécanique et grâce auquel on puisse déterminer de façon

2

précise pour un engin de navigation, d'une part son angle de dérive, c'est-à-dire l'angle que fait son axe de déplacement vrai ou axe de navigation, avec son axe propre suivant lequel il se déplacerait en l'absence de toute dérive, d'autre part sa vitesse suivant cet axe de navigation, toutes ces grandeurs se rapportant bien entendu à la masse d'eau dans laquelle l'engin se déplace.

Conformément à l'invention l'on fait comporter au dispositif :

- deux transducteurs émetteurs dont les axes d'émission sont décalés du même angle fixe, inférieur à 90°, par rapport à l'axe de l'engin ;
- deux transducteurs récepteurs pour recevoir les échos respectifs renvoyés par l'eau ;
- des moyens pour déterminer les différences entre la fréquence d'émission et celles respectives des échos correspondant à l'un et à l'autre des transducteurs émetteurs ;
- et des moyens pour déduire de ces différences d'une part l'angle de dérive de l'engin, d'autre part sa vitesse suivant son axe de navigation.

Le dessin annexé, donné à titre d'exemple, permetttra de mieux comprendre l'invention, les caractéristiques qu'elle présente et les avantages qu'elle est susceptible de procurer :

Fig. 1 montre schématiquement la disposition générale des deux couples de transducteurs d'un dispositif suivant l'invention par rapport à l'axe du bateau ou autre engin qui les porte.

Fig. 2 indique la position de l'axe propre du bateau, de l'axe de navigation et des axes moyens des couples de transducteurs.

Fig. 3 et 4 montrent deux schémas électriques d'un dispositif suivant l'invention.

Fig. 5 indique une variante suivant laquelle les transducteurs sont focalisés dans chaque couple.

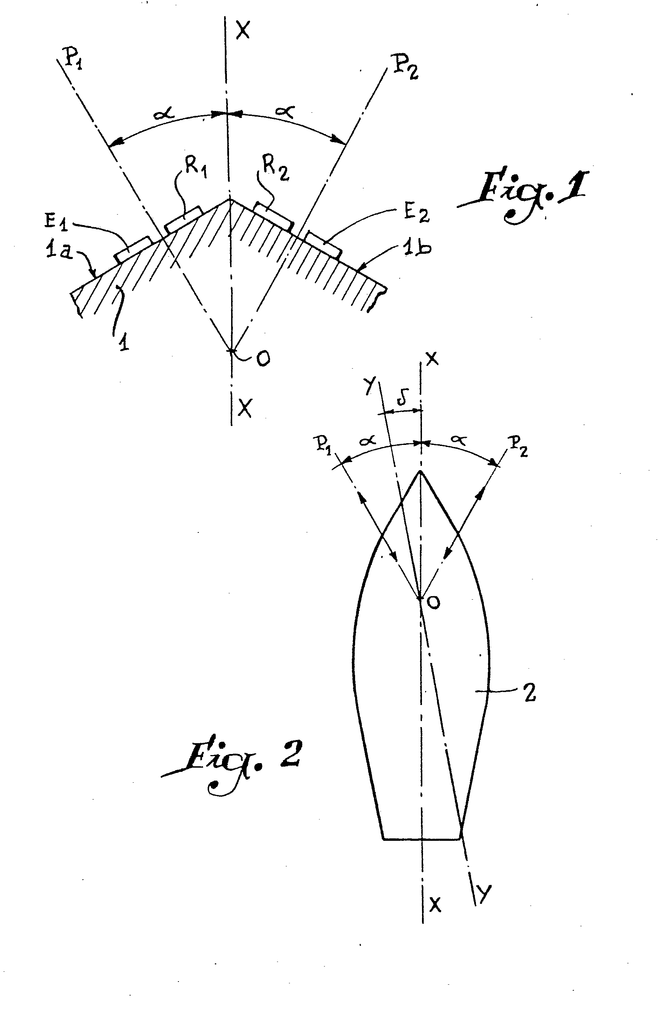

En fig. 1 la référence 1 désigne un support immergé rigidement fixé au bateau ou autre engin considéré. On a indiqué en X-X l'axe propre de cet engin. Comme montré, le support 1 comporte deux faces 1a et 1b symétriquement inclinées par rapport à une droite transversale à l'axe X-X, l'angle d'inclinaison, de toute manière inférieur à 90°, pouvant être de 30° par exemple. Sur chaque face 1a ou 1b est fixé un couple de transducteurs ultra-sonores, savoir un transducteur émetteur E1, respectivement E2, et un transducteur récepteur R1, respectivement R2. Chaque couple comporte un axe moyen P1, respectivement P2, ces deux axes se coupant en O sur l'axe X-X de l'engin avec lequel ils font un même angle $\propto$ . Bien entendu tout l'ensemble représenté peut être enfermé dans une enveloppe protectrice appropriée.

Fig. 2 l'on a schématisé en 2 l'engin de navigation, supposé constitué par un bateau à voile. On retrouve l'axe X-X de celui-ci, le point O qui constitue le centre du support des transducteurs immergé sous la quille et les axes OP1 et OP2 correspondant aux deux couples émetteur-récepteur, ces axes étant inclinés de l'angle $\propto$ de part et d'autre dudit axe X-X. Par ailleurs, sous l'effet du vent latéral le bateau 2 ne se déplace pas exactement suivant cet axe X-X ; il dérive et son déplacement réel s'effectue suivant un autre axe Y-Y, ou axe de navigation, qui fait avec X-X un angle $\delta$ .

Si l'on appelle F la fréquence commune des deux transducteurs émetteurs E1 et E2, f1 et f2 les différences entre cette fréquence d'émission et les fréquences des échos détectés par les transducteurs récepteurs respectifs R1 et R2 (c'est-à-dire les variations de fréquence dues à l'effet Doppler), $\underline{v}$ la vitesse du bateau 2 suivant l'axe de navigation Y-Y et $\underline{c}$ la vitesse du son dans l'eau on a, lorsque $\propto$ est égal à 30° :

$$v^2 = \frac{(f1^2 + f2^2 + f1 \cdot f2) \; c^2}{3fo2}$$

4

Connaissant ainsi v l'on peut calculer le cosinus de l'angle de dérive $\delta$ par la formule :

$$\cos \delta = \frac{(f1.f2)\ c}{2v.fo}$$

Tous ces calculs peuvent aisément être effectués par voie numérique et/ou analogique à l'aide d'ensembles électroniques appropriés.

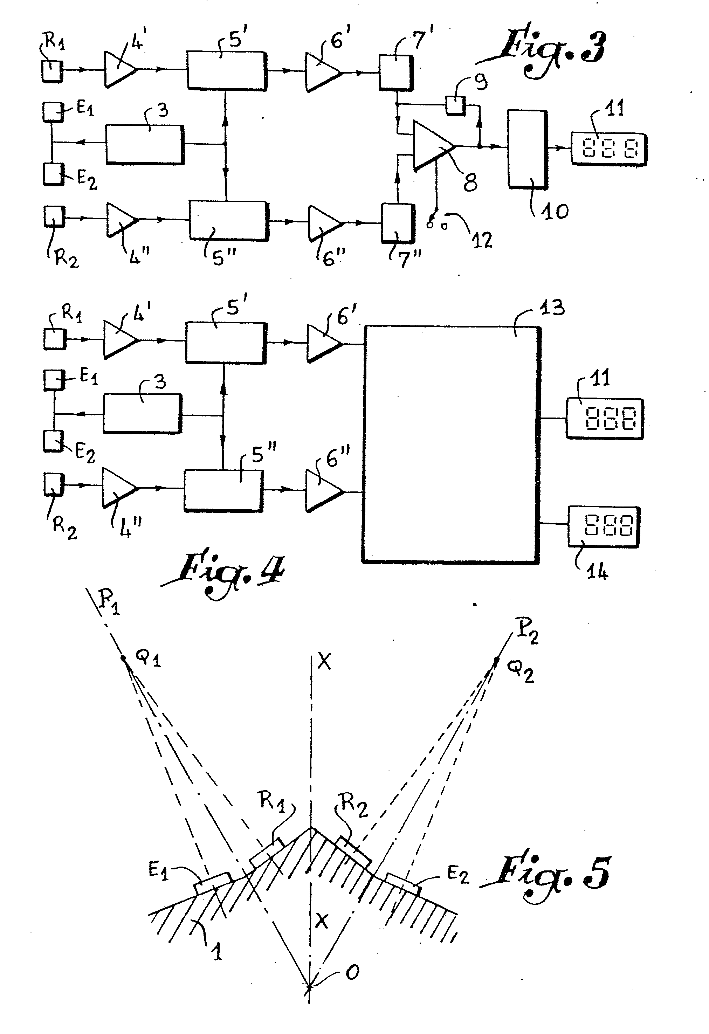

Fig. 3 montre à cet égard une première forme d'exécution des circuits du dispositif. On y trouve un oscillateur 3 qui commande les transducteurs émetteurs E1, E2, et respectivement pour chaque transducteur récepteur R1, R2 un amplificateur 4', 4", un démodulateur 5', 5" recevant le signal de l'oscillateur 3 et faisant ressortir la différence de fréquence, un amplificateur 6', 6" qui reçoit le signal de sortie du démodulateur, et un convertisseur numérique-analogique 7', 7". Les sorties de ces derniers aboutissent à un mélangeur 8 auquel est associé un circuit correcteur de contre-réaction 9. La sortie de 8 parvient à un convertisseur analogique-numérique 10, lequel envoie son signal à un dispositif d'affichage 11. Au mélangeur 8 est associé un commutateur 12 qui permet d'afficher en 11 soit l'angle de dérive, soit la vitesse.

La forme d'exécution de fig. 4 se distingue de celle de fig. 3 en ce que les sorties des amplificateurs 6', 6" sont directement envoyées à un mini-ordinateur 13 qui commande directement le dispositif d'affichage. On a supposé ici que ce dernier affichait simultanément la vitesse et l'angle de dérive, sans par conséquent qu'il soit besoin d'un commutateur sélecteur. Par ailleurs une autre sortie de l'ordinateur 13 aboutit à un indicateur de sens de dérive 14.

Fig. 5 indique d'autre part une variante concernant l'agencement des couples de transducteurs E1-R1 et E2-R2. Alors qu'en fig. 1 les deux transducteurs de chaque couple avaient leurs axes individuels parallèles, ici ces axes convergent vers un point Q1, Q2 situé sur l'axe moyen P1, P2 du couple considéré. En d'autres termes les deux transducteurs sont focalisés.

5

Cette disposition présente l'avantage de concentrer vers le point de convergence ou foyer $Q1$, $Q2$ la zone de la masse d'eau qui engendre l'écho. On peut ainsi réduire considérablement l'influence des réflexions parasites, les parties de cette masse situées au-delà desdits foyers n'intervenant pratiquement plus.

Il doit d'ailleurs être entendu que la description qui précède n'a été donnée qu'à titre d'exemple et qu'elle ne limite nullement le domaine de l'invention dont on ne sortirait pas en remplaçant les détails d'exécution décrits par tous autres équivalents.

Revendications de Brevet

1. Dispositif pour la mesure de la vitesse et de la dérive d'un engin de navigation par rapport à l'eau à l'aide de plusieurs faisceaux d'ondes ultra-sonores orientés obliquement par rapport à l'axe qui serait celui de déplacement en l'absence de dérive, et en relevant les différences entre les fréquences des échos et celle de l'émission, caractérisé en ce qu'il comprend deux transducteurs émetteurs (E1, E2) dont les axes d'émission sont décalés du même angle fixe inférieur à 90° par rapport à l'axe (X-X) du bateau (2), deux transducteurs récepteurs (R1, R2) pour recevoir les échos renvoyés par l'eau, des moyens pour déterminer les différences entre la fréquence d'émission et celles respectives des échos correspondant à l'un et à l'autre des transducteurs émetteurs, et des moyens pour déduire de ces différences d'une part l'angle de dérive de l'engin, c'est-à-dire l'angle ($\delta$) entre son axe propre (x-x) et l'axe de navigation (y-y) suivant lequel il se déplace, et d'autre part sa vitesse (v) suivant cet axe de navigation.

2. Appareil suivant la revendication 1, caractérisé en ce qu'il comprend un oscillateur commun (3) qui actionne les deux transducteurs émetteurs (E1, E2), un amplificateur individuel (4', 4") associé à chaque transducteur récepteur (R1, R2), un démodulateur individuel (5', 5") recevant d'une part la sortie d'un amplificateur (4', 4") et d'autre part le signal de l'oscillateur (3) de manière à fournir un signal correspondant à la différence entre les deux fréquence qui lui sont appliquées, des moyens (7', 7", 8, 9, 12, 10 ; 13) pour déduire de ces différences soit la vitesse suivant l'axe de navigation (Y-Y), soit l'angle de dérive ($\delta$), soit les deux, et des dispositifs d'affichage des valeurs ainsi calculées.

3. Appareil suivant la revendication 2, caractérisé en ce que les moyens de traitement des différences de fréquence sont constitués par un miniordinateur (13).

4. Appareil suivant la revendication 1, caractérisé en ce que dans chaque couple constitué par un transducteur émetteur (E1, E2) et le transducteur récepteur (R1, R2) qui lui est associé, ces deux transducteurs sont focalisés, en ce sens que leurs axes convergent en un point situé à une certaine distance d'eux.

*Fig. 1*

*Fig. 2*

*Fig. 3*

*Fig. 4*

*Fig. 5*

# RAPPORT DE RECHERCHE EUROPEENNE

Office européen
des brevets

Numéro de la demande

EP 80 42 0034

| Catégorie | DOCUMENTS CONSIDERES COMME PERTINENTS | | Revendication concernée |
|---|---|---|---|
| | Citation du document avec indication, en cas de besoin, des parties pertinentes | | |
| X | FR - A - 595 085 (CHILOWSKY)<br>* Page 1, lignes 14-20; de page 1, ligne 39 à page 2, ligne 17; page 3, lignes 22-31; page 5, lignes 26-52; page 6, lignes 9-46 et 69-79; de page 6, ligne 95 à page 7, ligne 4; page 8, lignes 42-84; page 9, lignes 5-24; de page 9, ligne 65 à page 10, ligne 7; page 10, lignes 32-51; figures 3,4,12 *<br>& US - A - 1 864 638 | | 1,2 |
| | -- | | |
| A | US - A - 2 869 118 (TULL et al.)<br>* Colonne 1, lignes 15-27; de colonne 2, ligne 34 à colonne 4, ligne 36; colonne 6, lignes 22-64; figures 1,4,6,7 * | | 1,2 |
| | -- | | |
| A | GB - A - 1 415 839 (DETECTRONIC LTD.)<br>* Page 1, lignes 9-41; de page 1, ligne 49 à page 2, ligne 22; page 2, lignes 84-90; les figures *<br>& DE - A - 2 312 917 | | 1,2 |
| | -- | | |
| A | FR - A - 2 041 198 (CCI AEROSPACE)<br>* Page 1, lignes 1-3; de page 2, ligne 1 à page 3, ligne 4; page 3, lignes 35-38; de page 4, ligne 18 à page 5, ligne 36; les figures *<br>& DE - A - 2 019 305 | | 1,2 |
| | -- | | |

## CLASSEMENT DE LA DEMANDE (Int. Cl. 3)

G 01 S 15/60
15/87
G 01 P 5/00

## DOMAINES TECHNIQUES RECHERCHES (Int. Cl. 3)

G 01 S 7/52
15/00
15/50
15/58
15/60
13/58
13/60
G 01 P 5/00
G 01 C 21/06

## CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 25-04-1980 | OLDROYD |

OEB Form 1503.1 06.78

Office européen
des brevets

**RAPPORT DE RECHERCHE EUROPEENNE**

| Catégorie | Citation du document avec indication, en cas de besoin, des parties pertinentes | Revendication concernée |
|---|---|---|
| | **DOCUMENTS CONSIDERES COMME PERTINENTS** | |
| X | <u>US - A - 2 770 795</u> (PETERSON) <br><br> * Colonne 1, lignes 15-60; colonne 2, lignes 3-49; figures 1,2 * <br><br> ---- | 1,2,4 |

CLASSEMENT DE LA DEMANDE (Int. Cl. 3)

DOMAINES TECHNIQUES RECHERCHES (Int. Cl. 3)

OEB Form 1503.2    06.78